# EUROPEAN PATENT APPLICATION

(11) **EP 4 808 190 A1**
(43) Date of publication of application: **16.09.2026**
(21) Application number: 23957891.7
(22) Date of filing: 06.11.2023
(51) Int. Cl.: H04W 24/04

(54) **COMMUNICATION METHOD, ACCESS POINT, AND COMMUNICATION SYSTEM**

(71) Applicant: Beijing Xiaomi Mobile Software Co., Ltd., Beijing 100085 (CN)
(72) Inventor: CHENG, Yajun, Beijing 100085 (CN)
(74) Representative: Gunzelmann, Rainer
(86) International application number: PCT/CN2023/130003
(87) International publication number: WO 2025/097277

(57) **Abstract**

Embodiments of the present disclosure relate to a communication method, an access point, and a communication system. The communication method is applied to a sharing access point (AP), and comprises: when obtaining a transmission opportunity (TXOP), determining a first radio frame, wherein the first radio frame identifies that the sharing AP shares a transmission duration with a sharing recipient on the basis of the TXOP, the first radio frame comprises first identification information, the first identification information comprises identification information of the sharing recipient, and the sharing recipient comprises a sharing recipient AP; and sending the first radio frame to instruct the sharing recipient to perform within the transmission duration data interaction with the sharing AP, or an STA associated with the sharing recipient. Thus, in the C-TDMA process, a sharing AP can allocate a transmission duration to a sharing recipient AP supporting inter-AP TXS among neighbor APs of the sharing AP.

## Description

### TECHNICAL FIELD

The present disclosure relates to a field of communication technology, and specifically to a communication method, an access point (AP), and a communication system.

### BACKGROUND

As Wi-Fi technology continues to evolve, a next-generation Wi-Fi technology, ultra high reliability (UHR), is proposed. In the UHR technology, an access point (AP) may share a transmission time of a transmission opportunity (TXOP) with other stations (STAs). After obtaining the transmission time, the other STAs may further share the transmission time with an associated STA or an associated AP, so that the associated STA or the associated AP can perform non-triggered based sounding (Non-TB) data transmission or peer to peer (P2P) data transmission.

Therefore, a method for processing a TXOP needs to be provided to improve a TXOP sharing mechanism and support the UHR.

### SUMMARY

Embodiments of the present disclosure provide a communication method, an access point (AP), and a communication system to provide a further enhanced power saving mechanism.

According to a first aspect, embodiments of the present disclosure provide a communication method, performed by a sharing AP, including: determining a first frame after obtaining a transmission opportunity (TXOP), in which the first frame indicates that the sharing AP shares a transmission duration with a shared device according to the TXOP; in which the first frame includes first identifier information, the first identifier information includes identifier information of the shared device, and the shared device includes a shared AP; and sending the first frame to indicate the shared device to perform data interaction with the sharing AP or with a station (STA) associated with the shared device within the transmission duration.

According to a second aspect, embodiments of the present disclosure provide a communication method, performed by a first AP, including: receiving a first frame, in which the first frame indicates that a sharing AP shares a transmission duration with a shared device according to an obtained TXOP; in which the first frame includes first identifier information, the first identifier information includes identifier information of the shared device, and the shared device includes a shared AP; and determining that the first identifier information includes identifier information of the first AP, and performing data interaction with the sharing AP or with an STA associated with the first AP within the transmission duration.

According to a third aspect, embodiments of the present disclosure further provide an AP, being a sharing AP, including: a determining module, configured to determine a first frame after obtaining a TXOP, in which the first frame indicates that the sharing AP shares a transmission duration with a shared device according to the TXOP; in which the first frame includes first identifier information, the first identifier information includes identifier information of the shared device, and the shared device includes a shared AP; and a sending module, configured to send the first frame to indicate the shared device to perform data interaction with the sharing AP or with an STA associated with the shared device within the transmission duration.

According to a fourth aspect, embodiments of the present disclosure further provide an AP, being a first AP, including: a receiving module, configured to receive a first frame, in which the first frame indicates that a sharing AP shares a transmission duration with a shared device according to an obtained TXOP; in which the first frame includes first identifier information, the first identifier information includes identifier information of the shared device, and the shared device includes a shared AP; and a processing module, configured to determine that the first identifier information includes identifier information of the first AP, and perform data interaction with the sharing AP or with an STA associated with the first AP within the transmission duration.

According to a fifth aspect, embodiments of the present disclosure further provide an AP, including: one or more processors, in which the AP is configured to implement the communication method according to the first aspect or the second aspect.

Embodiments of the present disclosure further provide a communication system, including a sharing AP and a shared AP, in which the sharing AP is configured to implement the communication method according to the first aspect, and the first AP is configured to implement the communication method according to the second aspect.

Embodiments of the present disclosure further provide a storage medium storing instructions that, when executed on a communication device, cause the communication device to implement the communication method according to the first aspect or the second aspect.

In embodiments of the present disclosure, the sharing AP determines the first frame after obtaining the TXOP, and indicates through the first frame that the sharing AP shares the transmission duration with the shared device according to the TXOP, in which the first frame includes the first identifier information, the first identifier information includes the identifier information of the shared device, and the shared device includes the shared AP; and sends the first frame to the shared device to indicate the shared device to perform the data interaction with the sharing AP or with the STA associated with the shared device within the transmission duration. In this way, in a coordinated time division multiple address (C-TDMA) process, the transmission duration is allocated by the sharing AP to a shared AP that supports inter-AP TXOP sharing (TXS) among its neighbor APs.

Additional aspects and advantages of embodiments of present disclosure will be given in part in the following descriptions, become apparent in part from the following descriptions, or be learned from the practice of embodiments of the present disclosure.

### BRIEF DESCRIPTION OF THE DRAWINGS

In order to more clearly illustrate the technical solution in embodiments of the disclosure, the accompanying drawings to be used in embodiments of the disclosure will be described below. The following drawings are only some embodiments of the present disclosure, and do not constitute a limitation on the protection scope of the present disclosure.
FIG. 1 is a schematic diagram of an architecture of a communication system according to embodiments of the present disclosure.
FIG. 2 is a schematic diagram of interaction of a communication method according to embodiments of the present disclosure.
FIG. 3 is a schematic diagram of a scenario of a communication method according to embodiments of the present disclosure.
FIG. 4 is a first flowchart of a communication method according to embodiments of the present disclosure.
FIG. 5 is a second flowchart of a communication method according to embodiments of the present disclosure.
FIG. 6 is a block diagram of a sharing access point (AP) according to embodiments of the present disclosure.
FIG. 7 is a block diagram of a shared AP according to embodiments of the present disclosure.
FIG. 8 is a block diagram of a terminal according to embodiments of the present disclosure.
FIG. 9 is a block diagram of a chip according to embodiments of the present disclosure.

### DETAILED DESCRIPTION

Embodiments of the present disclosure provide a communication method, an access point (AP), and a communication system.

According to a first aspect, embodiments of the present disclosure provide a communication method, performed by a sharing AP, including: determining a first frame after obtaining a transmission opportunity (TXOP), in which the first frame indicates that the sharing AP shares a transmission duration with a shared device according to the TXOP; in which the first frame includes first identifier information, the first identifier information includes identifier information of the shared device, and the shared device includes a shared AP; and sending the first frame to indicate the shared device to perform data interaction with the sharing AP or with a station (STA) associated with the shared device within the transmission duration.

In the above embodiments, the sharing AP determines the first frame after obtaining the TXOP, and indicates through the first frame that the sharing AP shares the transmission duration with the shared device according to the TXOP, in which the first frame includes the first identifier information, the first identifier information includes the identifier information of the shared device, and the shared device includes the shared AP; and sends the first frame to the shared device to indicate the shared device to perform the data interaction with the sharing AP or with the STA associated with the shared device within the transmission duration. In this way, in a coordinated time division multiple address (C-TDMA) process, the transmission duration is allocated by the sharing AP to a shared AP that supports inter-AP TXOP sharing (TXS) among its neighbor APs.

In combination with some embodiments of the first aspect, in some embodiments, the first identifier information is carried in a User Info field of the first frame; in which the User Info field includes an AP MLD ID subfield and a Link ID subfield, and the first identifier information indicates identifier information of the shared AP; in which the AP MLD ID subfield indicates an AP MLD ID of a MLD AP with which the shared AP affiliated, and the Link ID subfield indicates a Link ID of a working link of the shared AP.

In the above embodiments, the first identifier information is carried in the User Info field of the first frame, the User Info field is set to include the AP MLD ID subfield and the Link ID subfield, the AP MLD ID subfield indicates the AP MLD ID of the MLD AP with which the shared AP affiliated, and the Link ID subfield indicates the Link ID of the working link of the shared AP, so that the identifier information of the shared AP is indicated. In this way, in a C-TDMA process, the transmission duration may be allocated by the sharing AP to a target shared AP that supports inter-AP TXS among its neighbor APs.

In combination with some embodiments of the first aspect, in some embodiments, the first frame further includes second identifier information; in which the second identifier information indicates a type of TXS initiated by the sharing AP, and the type of the TXS includes allocating the transmission duration to the shared AP.

In the above embodiments, the second identifier information in the first frame indicates the type of the TXS initiated by the sharing AP, and the type of the TXS includes allocating the transmission duration to the shared AP. In this way, a device that obtains the first frame may parse the first frame to obtain the type of the TXS initiated by the sharing AP.

In combination with some embodiments of the first aspect, in some embodiments, the second identifier information is carried in a Triggered TXOP Sharing Mode subfield of the first frame; the Triggered TXOP Sharing Mode subfield is carried in a Common Info field of the first frame; in which the Triggered TXOP Sharing Mode subfield is set to a first parameter value, indicating that the sharing AP allocates the transmission duration to the shared AP.

In the above embodiments, the first frame includes the Common Info field, and the Common Info field includes the Triggered TXOP Sharing Mode subfield. When the Triggered TXOP Sharing Mode subfield is set to the first parameter value, it indicates that the sharing AP allocates the transmission duration to the shared AP. In this way, a device that obtains the first frame may parse the parameter value of the Triggered TXOP Sharing Mode subfield in the first frame to obtain that the sharing AP allocates the transmission duration to the shared AP.

In combination with some embodiments of the first aspect, in some embodiments, the method further includes: determining a second frame, in which the second frame includes third identifier information, and the third identifier information indicates whether a neighbor AP of the sharing AP supports inter-AP TXS; and sending the second frame.

In the above embodiments, the sharing AP determines and sends the second frame, and uses the third identifier information in the second frame to identify whether the neighbor AP of the sharing AP supports the inter-AP TXS. In this way, a device that receives the second frame may determine whether the neighbor AP of the sharing AP supports the inter-AP TXS.

In combination with some embodiments of the first aspect, in some embodiments, the third identifier information is carried in a first Triggered TXOP Sharing Mode 3 Support indicator bit of the second frame; the first Triggered TXOP Sharing Mode 3 Support indicator bit is carried in a Reduced Neighbor Report element field of the second frame; in which the first Triggered TXOP Sharing Mode 3 Support indicator bit is set to a third parameter value, indicating that the neighbor AP supports the inter-AP TXS.

In the above embodiments, the second frame includes a Reduced Neighbor Report element field. By carrying an MLD Parameters subfield in the Reduced Neighbor Report element field and setting the first Triggered TXOP Sharing Mode 3 support indicator bit in the MLD Parameters subfield to the third parameter value, it is indicated that the neighbor AP supports the inter-AP TXS; otherwise, it is indicated that the neighbor AP does not support the inter-AP TXS. In this way, a device that obtains the second frame may parse the first Triggered TXOP Sharing Mode 3 support indicator bit in the MLD Parameters subfield to determine whether the neighbor AP supports the inter-AP TXS, and when the first Triggered TXOP Sharing Mode 3 support indicator bit is set to the third parameter value, it is determined that the neighbor AP supports the inter-AP TXS.

In combination with some embodiments of the first aspect, in some embodiments, the second frame further includes fourth identifier information, and the fourth identifier information indicates whether the sharing AP supports the inter-AP TXS.

In the above embodiments, the fourth identifier information in the second frame is used to identify whether the sharing AP supports the inter-AP TXS. In this way, a device that receives the second frame may determine whether the sharing AP supports TXS.

In combination with some embodiments of the first aspect, in some embodiments, the fourth identifier information is carried in a second Triggered TXOP Sharing Mode 3 Support indicator bit of the second frame; the second Triggered TXOP Sharing Mode 3 Support indicator bit is carried in an Ultra High Reliability (UHR) Capabilities element field of the second frame; in which the second Triggered TXOP Sharing Mode 3 Support indicator bit is set to a fourth parameter value, indicating that the sharing AP supports the inter-AP TXS.

In the above embodiments, a device that receives the second frame may parse the second frame to obtain the UHR Capabilities element field, parse the UHR Capabilities element to obtain the second Triggered TXOP Sharing Mode 3 support indicator bit, and then determine whether the sharing AP supports the inter-AP TXS according to a parameter value of the second Triggered TXOP Sharing Mode 3 support indicator bit. When the second Triggered TXOP Sharing Mode 3 support indicator bit is set to the fourth parameter value, it is determined that the sharing AP supports the inter-AP TXS.

In combination with some embodiments of the first aspect, in some embodiments, the User Info field further includes at least one of: an Allocation Duration subfield, a Resource Unit (RU) Allocation subfield, or a primary/secondary 160 (PS160) subfield.

In the above embodiments, the User Info field of the first frame carries the Allocation Duration subfield, the RU allocation subfield, or the PS160 subfield. In this way, a device that receives the first frame may parse the first frame to obtain a transmission resource allocated by the sharing AP to the shared device. Then, when the device that receives the first frame is a shared device, it performs the data interaction according to the transmission resource; when the device that receives the first frame is not a shared device, it avoids performing the data interaction within the transmission resource, thus avoiding interference to a process in which the shared device performs the data interaction according to the transmission resource.

In combination with some embodiments of the first aspect, in some embodiments, performing, by the shared device, the data interaction with the sharing AP or with the STA associated with the shared device within the transmission duration, includes: performing, by the shared device, the data interaction with the sharing AP or with the STA associated with the shared device within the transmission duration, according to a transmission resource indicated by at least one of the Allocation Duration subfield, the RU Allocation subfield, or the PS160 subfield.

In the above embodiments, the shared AP performs the data interaction with the sharing AP or with the STA associated with the shared AP within the transmission duration, according to the transmission resource indicated by the at least one of the Allocation Duration subfield, the RU allocation subfield, or the PS160 subfield indicated by the first frame, which may save signaling overhead and avoid contention conflict and transmission interference in an overlapping basic service set (OBSS) scenario.

According to a second aspect, embodiments of the present disclosure provide a communication method, performed by a first AP, including: receiving a first frame, in which the first frame indicates that a sharing AP shares a transmission duration with a shared device according to an obtained TXOP; in which the first frame includes first identifier information, the first identifier information includes identifier information of the shared device, and the shared device includes a shared AP; and determining that the first identifier information includes identifier information of the first AP, and performing data interaction with the sharing AP or with an STA associated with the first AP within the transmission duration.

In combination with some embodiments of the second aspect, in some embodiments, the first identifier information is carried in a User Info field of the first frame; in which the User Info field includes an AP MLD ID subfield and a Link ID subfield, and the first identifier information indicates identifier information of the shared AP; in which the AP MLD ID subfield indicates an AP MLD ID of a MLD AP with which the shared AP affiliated, and the Link ID subfield indicates a Link ID of a working link of the shared AP; and the User Info field includes an AID12 subfield, and the first identifier information indicates identifier information of the shared STA.

In combination with some embodiments of the second aspect, in some embodiments, determining that the first identifier information includes the identifier information of the first AP includes: in a case that the User Info field includes the AP MLD ID subfield and the Link ID subfield, determining that the AP MLD ID subfield matches an identifier of a MLD AP with which the first AP affiliated, and that the Link ID subfield matches a link ID of a working link of the first AP, and determining that the first identifier information includes the identifier information of the first AP.

In combination with some embodiments of the second aspect, in some embodiments, the User Info field further includes at least one of: an Allocation Duration subfield, an RU Allocation subfield, or a PS160 subfield.

In combination with some embodiments of the second aspect, in some embodiments, performing the data interaction with the sharing AP or with the STA associated with the first AP within the transmission duration includes: performing the data interaction with the sharing AP or with the STA associated with the first AP within the transmission duration, according to a transmission resource indicated by at least one of the Allocation Duration subfield, the RU Allocation subfield, or the PS160 subfield.

According to a third aspect, embodiments of the present disclosure further provide an AP, being a sharing AP, including: a determining module, configured to determine a first frame after obtaining a TXOP, in which the first frame indicates that the sharing AP shares a transmission duration with a shared device according to the TXOP; in which the first frame includes first identifier information, the first identifier information includes identifier information of the shared device, and the shared device includes a shared AP; and a sending module, configured to send the first frame to indicate the shared device to perform data interaction with the sharing AP or with a STA associated with the shared device within the transmission duration.

According to a fourth aspect, embodiments of the present disclosure further provide an AP, being a first AP, including: a receiving module, configured to receive a first frame, in which the first frame indicates that a sharing AP shares a transmission duration with a shared device according to an obtained TXOP; in which the first frame includes first identifier information, the first identifier information includes identifier information of the shared device, and the shared device includes a shared AP; and a processing module, configured to determine that the first identifier information includes identifier information of the first AP, and perform data interaction with the sharing AP or with an STA associated with the first AP within the transmission duration.

According to a fifth aspect, embodiments of the present disclosure further provide an AP, including: one or more processors, in which the AP is configured to implement the optional implementations of the first aspect or the second aspect.

According to a sixth aspect, embodiments of the present disclosure further provide a communication system, including a sharing AP and a shared AP, in which the sharing AP is configured to implement the optional implementations of the first aspect, and the first AP is configured to implement the optional implementations of the second aspect.

According to a seventh aspect, embodiments of the present disclosure further provide a storage medium storing instructions, when executed on a communication device, cause the communication device to implement the optional implementations of the first aspect or the second aspect.

According to an eighth aspect, embodiments of the present disclosure provide a program product that, when executed by a communication device, causes the communication device to implement the method in the optional implementations of the first aspect or the second aspect.

According to a ninth aspect, embodiments of the present disclosure provide a computer program that, when running on a computer, causes the computer to implement the method in the optional implementations of the first aspect or the second aspect.

According to a tenth aspect, embodiments of the present disclosure provide a chip or a chip system, including a processing circuit, configured to implement the method according to the optional implementations of the first aspect or the second aspect.

It may be understood that the AP, the communication system, the storage medium, the program product, the computer program, the chip or the chip system are all used to implement the method in embodiments of the present disclosure. Therefore, beneficial effects that may be achieved may be referred to the beneficial effects in a corresponding method, which will not be repeated here.

Embodiments of the present disclosure provide a communication method, an AP, and a communication system. In some embodiments, terms such as communication method, method for sending a signal and method for sending a frame may be used interchangeably, and terms such as system for processing information and a communication system may be used interchangeably.

Embodiments of the present disclosure are not exhaustive and only serve as illustrations of some embodiments, but not as specific limitations on the protection scope of the present disclosure. When there is no contradiction, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, optional implementations in an embodiment may be arbitrarily combined. Furthermore, different embodiments may be arbitrarily combined. For example, some or all steps of different embodiments may be arbitrarily combined, and an embodiment may be arbitrarily combined with optional implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in embodiments of the present disclosure are for a purpose of describing specific embodiments only and are not intended to limit the present disclosure.

In embodiments of the present disclosure, "a plurality of" means two or more.

In some embodiments, terms such as "at least one of", "one or more", "a plurality of", "multiple", etc. may be used interchangeably.

In some embodiments, expressions such as "at least one of A or B", "A and/or B", "in a case A, in another case B", and "in response to a case A, in response to another case B" in the present disclosure, depending on situations, may include at least one of following solutions: performing A in some implementations (performing A independently of B); performing B in some implementations (performing B independently of A); selecting one of A or B for execution in some implementations (selectively performing A or B); and performing A and B in some implementations (performing both A and B). The similar principle applies when there are more parts such as A, B, C, etc.

In some embodiments, expressions such as "A or B", depending on situations, may include following technical solutions: performing A in some implementations (performing A independently of B); performing B in some implementations (performing B independently of A); and selecting one of A or B for execution in some implementations (selectively performing A or B). The similar principle applies when there are more parts such as A, B, C, etc.

The terms such as "first" and "second" added in front of other words in embodiments of the present disclosure are used solely to distinguish different described objects and do not limit a position, a sequence, a priority, a quantity, or content of the described objects. For a statement regarding the described object, reference may be made to claims or descriptions in the context of embodiments and should not constitute other restrictions due to the use of the above terms in front of other words. For example, if the described object is "field", ordinal numbers before the "field" in "first field" and "second field" do not limit a position or a sequence between fields. "First" and "second" do not limit whether modified "fields" are in a same message, nor do an order of the "first field" and the "second field." For another example, if the described object is "level", ordinal numbers before the "level" in "first level" and "second level" do not limit a priority between levels. Furthermore, a quantity of described objects is not limited by the ordinal numbers, which may be one or more. Taking "first apparatus" as an example, there may be one or more "apparatus". In addition, objects modified by different words may be the same or different. For example, if the described object is an "apparatus", "first apparatus" and "second apparatus" may be a same apparatus or different apparatuses, and their types may be the same or different. Similarly, if the described object is "information", "first information" and "second information" may be same information or different information, and their content may be the same or different.

In some embodiments, "including A", "including A", "configured to indicate A", or "carrying A" may be interpreted as directly carrying A or indirectly indicating A.

In some embodiments, terms such as "in response to...", "in response to determining...", "in a case that...", "when...", "if..." etc. may be used interchangeably.

In some embodiments, the terms such as "greater than", "greater than or equal to", "not less than", "more than", "more than or equal to", "no less than", "higher than", "higher than or equal to", "not lower than", "above", etc. may be used interchangeably. The terms such as "less than", "less than or equal to", "not greater than", "fewer than", "fewer than or equal to", "no more than", "lower than", "lower than or equal to", "not higher than", "below" etc. may also be used interchangeably.

In some embodiments, "device" and "apparatus" may be interpreted as either physical or virtual. Names are not limited to those recorded in embodiments. In some cases, they may be understood as "equipment", "device", "circuit", "network element", "node", "function", "unit", "section", "system", "network", "chip", "chip system", "entity", "subject", etc.

In some embodiments, "network" may be interpreted as a device included in a network, for example, an access network device, a core network device, etc.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the present disclosure may be implemented as an independent embodiment. Any combination of elements, rows, or columns may also be implemented as an independent embodiment.

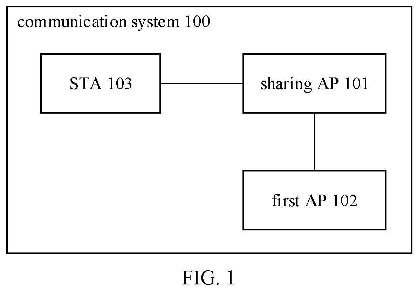

FIG. 1 is a schematic diagram of an architecture of a communication system according to embodiments of the present disclosure.

As shown in FIG. 1, a communication system 100 includes a sharing AP 101 and a first AP 102.

In some embodiments, the sharing AP 101 and the first AP 102 may be APs for a mobile terminal to enter a wired network. An AP is equivalent to a bridge connecting a wired network and a wireless network, and its main function is to connect various wireless network clients together and then connect the wireless network to the Ethernet. Specifically, an AP may be a terminal or a network device with a wireless fidelity chip. Optionally, the AP may support various WLAN standards, such as 802.11ax, 802.11be, 802.11ac, 802.11n, 802.11g, 802.11b, 802.11a, 802.11bf, 802.11bn, and support the next-generation 802.11 protocol, which is not limited herein.

Optionally, in embodiments of the present disclosure, the AP and the STA may be devices supporting multi-link, for example, may be respectively represented as an AP multi-link device (AP MLD) and a non-AP multi-link device (non-AP MLD). The AP MLD may represent an AP supporting a multi-link communication function, and the non-AP MLD may represent an STA supporting the multi-link communication function.

It may be understood that the communication system in embodiments of the present disclosure is to clearly illustrate the technical solution of embodiments of the present disclosure, and does not constitute a limitation on the technical solution in embodiments of the present disclosure. Those skilled in the art may know, with evolution of the system architecture and emergence of new service scenarios, the technical solution in embodiments of the disclosure is also applicable to similar technical problems.

The following embodiments of the present disclosure may be applied to the communication system 100 shown in FIG. 1, or to some entities, which are not limited herein. Entities in FIG. 1 are illustrative. The communication system may include all or some of the entities in FIG. 1, or may include other entities not shown in FIG. 1. The entities may be in any number and in any form. Each entity may be physical or virtual. Connection relationships between the entities are illustrative. The entities may be unconnected or may be connected. They may be connected in any manner, for example, they may be directly connected or indirectly connected, or may be connected via a wired or wireless way.

Embodiments of the present disclosure may be applied to a wireless local area network (WLAN), for example, a local area network using 802.11 series of protocols. In the WLAN, a basic service set (BSS) is a basic component of the WLAN. A BSS network consists of STAs that have a certain association within a specific coverage area. One scenario of the association is that STAs communicates directly with each other in an ad-hoc network, which is called an independent BSS (IBSS). Another more common scenario is that there is only one central STA dedicated to managing the BSS in the BSS network, which is called an AP, and other STAs in the BSS network that are not APs are called terminals, also referred to as non-AP STAs. APs and non-AP STAs are collectively referred to as STAs. When describing an STA, there is no need to distinguish between an AP and a non-AP STA. Within a same BSS network, due to a distance, a transmission power, and other reasons, one STA may be unable to detect other STAs that are far from it, making them hidden nodes to each other.

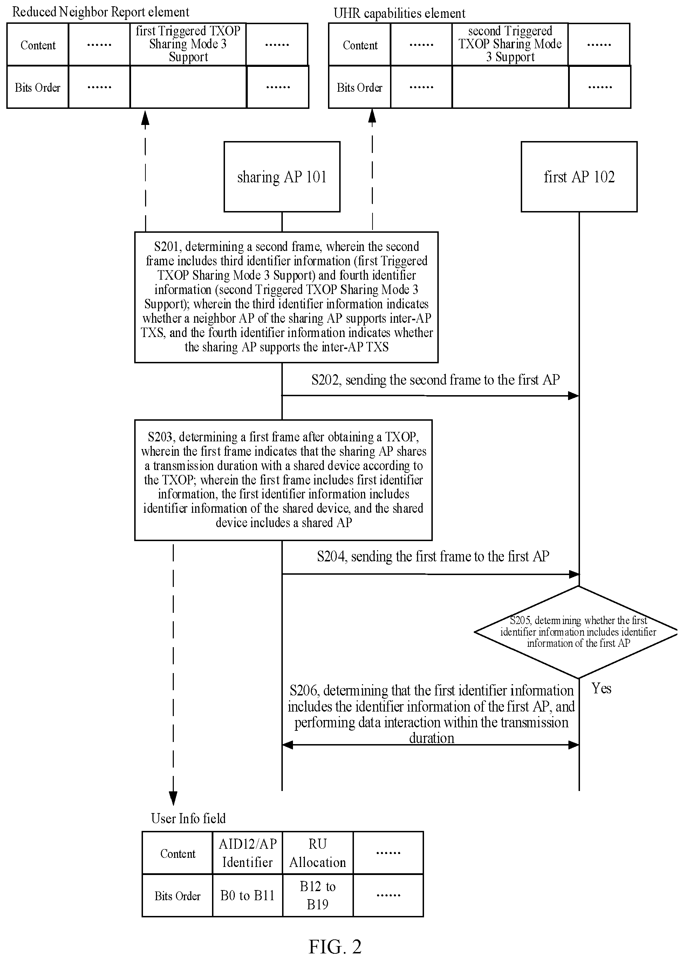

FIG. 2 is a schematic diagram of interaction of a communication method according to embodiments of the present disclosure. As shown in FIG. 2, the method includes following steps at S201 to S206.

At S201, a sharing AP 101 determines a second frame, in which the second frame includes third identifier information, and the third identifier information indicates whether a neighbor AP of the sharing AP supports inter-AP TXS.

Optionally, the second frame may include a beacon frame or a probe response frame.

With a development trend of more frequency bands and higher frequencies supported by Wi-Fi devices and diversification requirements of the communication service, WLAN devices are deployed more and more densely. Denser APs bring more inter-cell interference and increase a risk of access conflict. To further improve a user service quality and overall network performance, the next-generation Wi-Fi standard working group 802.11bn, while pursuing improvement in a communication rate, communication delay, and reliability within a single BSS, also focuses on multi-AP coordination. Through cooperative coordination among APs, communication resource allocation is more reasonable, a communication quality is ensured, access efficiency is improved, and better network performance is achieved.

APs may reduce the inter-cell interference via a coordination mechanism, ensuring the user service quality, and improving a network communication rate. The coordinated time division multiple access (C-TDMA), as a coordination mechanism among a plurality of APs, attracts much attention. The C-TDMA involves an AP that obtains an access right dividing a duration of the TXOP and sharing a frequency resource of part of its TXOP duration with a neighbor AP. The AP sharing the TXOP is called a sharing/coordination AP, and the AP that is shared and coordinated is called a shared/coordinated AP.

Currently, in the C-TDMA process, the sharing AP may identify the target STA via an association identifier (AID) subfield in a User Info field in a multi-user request-to-send transmission opportunity sharing (MU-RTS TXS) trigger frame, and set, in the MU-RTS TXS Trigger frame, a transmission duration allocated by the sharing AP to the target STA according to a TXOP it obtains, so that the target STA may perform uplink (UL) transmission or peer to peer (P2P) transmission within the transmission duration allocated by the sharing AP to the target STA according to the received MU-RTS TXS Trigger frame, thus realizing a TXS process between the sharing AP and the target STA.

For inter-AP TXS, i.e., a TXS process between the sharing AP and the shared AP, reference can be made to the TXS process between the sharing AP and the target STA.

Optionally, in some embodiments, the third identifier information is carried in a first Triggered TXOP Sharing Mode 3 Support indicator bit of the second frame; the first Triggered TXOP Sharing Mode 3 Support indicator bit is carried in a Reduced Neighbor Report element field; in which the first Triggered TXOP Sharing Mode 3 Support indicator bit is set to a third parameter value, indicating that the neighbor AP supports the inter-AP TXS.

As an example, the third parameter value may be set to 1, that is, when the first Triggered TXOP Sharing Mode 3 support indicator bit is set to 1, it indicates that the neighbor AP supports the inter-AP TXS; otherwise, it indicates that the neighbor AP does not support the inter-AP TXS.

In the above embodiments, the second frame includes the Reduced Neighbor Report element field. By carrying an MLD Parameters subfield in the Reduced Neighbor Report element field and setting the first Triggered TXOP Sharing Mode 3 support indicator bit in the MLD Parameters subfield to the third parameter value, it is indicated that the neighbor AP supports the inter-AP TXS; otherwise, it is indicated that the neighbor AP does not support the inter-AP TXS. In this way, a device that obtains the second frame may parse the first Triggered TXOP Sharing Mode 3 support indicator bit in the MLD Parameters subfield to determine whether the neighbor AP supports the inter-AP TXS, and when the first Triggered TXOP Sharing Mode 3 support indicator bit is set to the third parameter value, it is determined that the neighbor AP supports the inter-AP TXS.

As an example, refer to Table 1, which shows the MLD Parameters subfield in the neighbor AP information fields in the Reduced Neighbor Report element.

**Table 1:**

| Content | AP MLD ID | Link ID | BSS Parameters Change Count | All Updates Included | Disabled Link Indication | Triggered TXOP Sharing Mode 3 Support | Reserved |
|---|---|---|---|---|---|---|---|
| Bits | 8 | 4 | 8 | 1 | 1 | 1 | 1 |
| Bits Order | B0 to B7 | B8 to B11 | B12 to B19 | B20 | B21 | B22 | B23 |

In Table 1, the AP MLD ID field represents an ID of a MLD AP with which the AP affiliated, occupying 8 bits in the MLD Parameters subfield, with a corresponding bits order from B0 to B7. The Link ID represents a link ID of a working link of the AP, occupying 4 bits in the MLD Parameters subfield, with a corresponding bits order from B8 to B11. The BSS Parameters Change Count represents a number of changes of a BSS parameter set, occupying 8 bits in the MLD Parameters subfield, with a corresponding bits order from B12 to B19. The All Updates Included represents all updates included, occupying 1 bit in the MLD Parameters subfield, with a corresponding bit order being B20. The Disabled Link Indication represents a disabled link ID, occupying 1 bit in the MLD Parameters subfield, with a corresponding bit order being B21. The Triggered TXOP Sharing Mode 3 Support represents triggered support for the TXOP Sharing Mode 3, occupying 1 bit in the MLD Parameters subfield, with a corresponding bit order being B22. The Reserved represents a reserved bit, occupying 1 bit in the MLD Parameters subfield, with a corresponding bit order being B23.

The neighbor AP of the sharing AP 101 may be identified by a pair <AP MLD ID, Link ID>. If the Triggered TXOP Sharing Mode 3 support subfield is set to 1, it indicates that the neighbor AP supports the inter-AP TXS; otherwise, it indicates that the neighbor AP does not support the inter-AP TXS.

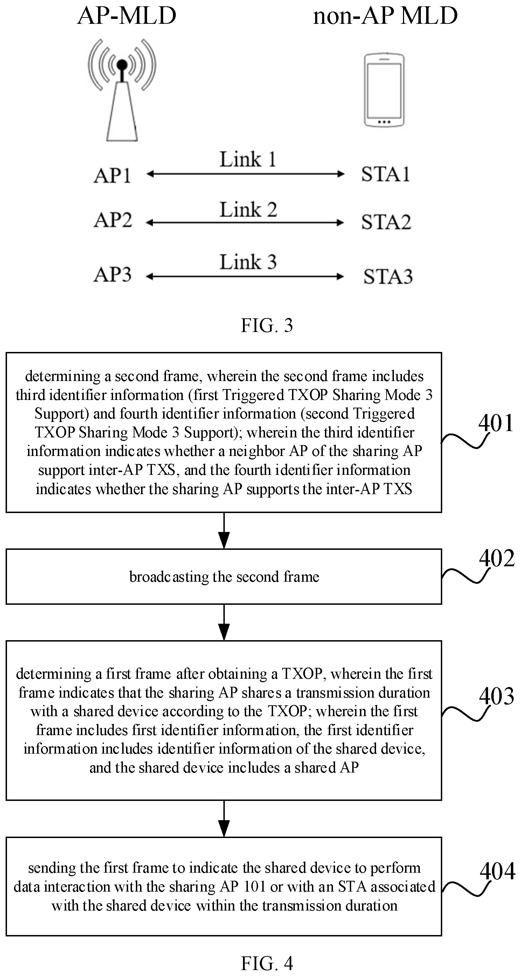

As an example, referring to FIG. 3, the AP MLD may represent an AP supporting a multi-link communication function, and the non-AP MLD may represent an STA supporting the multi-link communication function. Referring to FIG. 3, the AP MLD may operate under three communication links, namely AP1, AP2, and AP3 as shown in FIG. 3. The AP1 operates under a (communication) Link 1, the AP2 operates under a Link 2, and the AP3 operates under a Link 3. The non-AP MLD may also operate under three links, namely STA1, STA2, and STA3 as shown in FIG. 3. The STA1 operates under Link 1, the STA2 operates under Link 2, and the STA3 operates under Link 3. In the example of FIG. 3, it is assumed that the AP1 communicates with the STA1 via a corresponding first connection Link 1, similarly, the AP2 communicates with the STA2 via a corresponding second connection Link 2, and the AP3 communicates with the STA3 via a corresponding third connection Link 3. The identifier information of the AP may be uniquely determined by the ID of the MLD AP with which the AP affiliated and the link ID of the working link of the AP. Referring to Table 1, the neighbor AP of the sharing AP may be uniquely identified by the pair <AP MLD ID, Link ID> in the MLD Parameters subfield.

Optionally, in some embodiments, the second frame further includes fourth identifier information, and the fourth identifier information indicates whether the sharing AP supports the inter-AP TXS.

In the above embodiments, the fourth identifier information in the second frame indicates whether the sharing AP supports the inter-AP TXS. In this way, a device that receives the second frame may determine whether the sharing AP supports TXS.

In some embodiments, the fourth identifier information is carried in a second Triggered TXOP Sharing Mode 3 Support indicator bit of the second frame; the second Triggered TXOP Sharing Mode 3 Support indicator bit is carried in an UHR Capabilities element field of the second frame; in which the second Triggered TXOP Sharing Mode 3 Support indicator bit is set to a fourth parameter value, indicating that the sharing AP supports the inter-AP TXS.

Optionally, the UHR Capabilities element field may include an UHR MAC Capabilities Information field. The second Triggered TXOP Sharing Mode 3 support indicator bit is carried in the UHR MAC Capabilities Information field.

As an example, the fourth parameter value may be set to 1, that is, when the second Triggered TXOP Sharing Mode 3 support indicator bit is set to 1, it indicates that the sharing AP 101 supports the inter-AP TXS; otherwise, it indicates that the sharing AP 101 does not support the inter-AP TXS.

In the above embodiments, a device that receives the second frame may parse the second frame to obtain the UHR Capabilities element field, parse the UHR Capabilities element to obtain the second Triggered TXOP Sharing Mode 3 support indicator bit, and then determine whether the sharing AP supports the inter-AP TXS according to a parameter value of the second Triggered TXOP Sharing Mode 3 support indicator bit. When the second Triggered TXOP Sharing Mode 3 support indicator bit is set to the fourth parameter value, it is determined that the sharing AP supports the inter-AP TXS.

At S202, the sharing AP 101 broadcasts the second frame.

Optionally, in some embodiments, the sharing AP 101 may broadcast the second frame to a neighbor AP (including the first AP 102) of the sharing AP 101 or to an STA associated with the sharing AP 101.

In some embodiments, the STA includes, for example, a wireless communication chip supporting a Wi-Fi communication function, a wireless sensor, or a wireless communication terminal. Optionally, the wireless communication terminal includes at least one of, for example, a mobile phone, a wearable device, an Internet of Things device supporting a Wi-Fi communication function, a car with a Wi-Fi communication function, a smart car, a Pad, a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, or a wireless terminal in a smart home, which is not limited herein.

Specifically, the STA may be a terminal or a network device with a wireless fidelity (Wi-Fi) chip. Optionally, the STA may support a plurality of WLAN standards such as 802.11ax, 802.11be, 802.11ac, 802.11n, 802.11g, 802.11b, and 802.11a, and a next-generation 802.11 protocol, but is not limited thereto.

In the above embodiments, the sharing AP determines and sends the second frame, and uses the third identifier information in the second frame to identify whether the neighbor AP of the sharing AP supports the inter-AP TXS. In this way, a device that receives the second frame may determine whether the neighbor AP of the sharing AP supports the inter-AP TXS.

At S203, the sharing AP 101 determines a first frame after obtaining a TXOP, in which the first frame indicates that the sharing AP 101 shares a transmission duration with a shared device according to the TXOP; in which the first frame includes first identifier information, the first identifier information includes identifier information of the shared device, and the shared device includes a shared AP.

Optionally, the shared AP may be the first AP 102.

In the related art, when using a method of setting a receiver address (RA) of the MU-RTS TXS Trigger frame to an MAC address of the AP to identify the shared AP, it not only conflicts with a baseline in the 802.11 series of standards that sets the RA of the MU-RTS TXS Trigger frame to a broadcast address, but also causes problems such as low transmission efficiency because the sharing AP can only allocate the TXOP to a single shared AP. Therefore, in embodiments of the present disclosure, it is necessary to clearly specify how, in the C-TDMA process, the sharing AP allocates the transmission duration to the AP that supports the inter-AP TXS among its neighbor APs.

Optionally, the first frame may be an MU-RTS TXS Trigger frame.

Optionally, in the first frame, depending on an actual situation, it may be set whether the first identifier information indicates the identifier information of the shared AP or the identifier information of the shared STA. As an example, in the first frame, the shared AP and the shared STA may share a same field, so that in the C-TDMA process, the shared AP is identified via the first frame.

Optionally, in some embodiments, the first identifier information is carried in a User Info field of the first frame; in which the User Info field includes an AP MLD ID subfield and a Link ID subfield, and the first identifier information indicates identifier information of the shared AP 101; in which the AP MLD ID subfield indicates an AP MLD ID of a MLD AP with which the shared AP affiliated, and the Link ID subfield indicates a Link ID of a working link of the shared AP.

As recorded above, the AP may be uniquely identified by the pair <AP MLD ID, Link ID>, which will not be repeated here.

Optionally, the User Info field may further include an association identifier (AID)12 subfield, and first identifier information indicates identifier information of the shared STA.

Optionally, the AID12 field and the AP Identifier field may share a same field in the User Info field. For example, the AID12 field and the AP Identifier field may share the field indicated by B0 to B11 in the User Info field.

In the above embodiment, the first identifier information is carried in the User Info field of the first frame, and the User Info field is set to include the AP MLD ID subfield and the Link ID subfield. When the AP MLD ID subfield indicates the AP MLD ID of the MLD AP with which the shared AP affiliated, and the Link ID subfield indicates the Link ID of the working link of the shared AP, the identifier information of the shared AP is indicated. In this way, by having the pair <AP MLD ID, Link ID> and the AID12 subfield sharing the same field in the User Info field, in a C-TDMA process, the sharing AP 101 may allocate the transmission duration to a target shared AP 101 that supports the inter-AP TXS among its neighbor APs.

Optionally, in some embodiments, the User Info field further includes at least one of: an Allocation Duration subfield, an RU Allocation subfield, or a PS160 subfield.

In the above embodiment, the User Info field of the first frame carries the Allocation Duration subfield, the RU allocation subfield, and the PS160 subfield. In this way, a device that receives the first frame may parse the first frame to obtain a transmission resource allocated by the sharing AP to the shared device. Then, when the device that receives the first frame is a shared device, it performs the data interaction according to the transmission resource; when the device that receives the first frame is not a shared device, it avoids performing the data interaction within the transmission resource, thus avoiding interference to a process in which the shared device performs the data interaction according to the transmission resource.

As an example, refer to Table 2, which shows the User Info field in the MU-RTS TXS Trigger frame.

**Table 2:**

| Content | AID12/ AP Identifier | RU Allocation | Allocation Duration | Reserved | PS160 |
|---|---|---|---|---|---|
| Bits | 12 | 8 | 9 | 10 | 1 |
| Bits order | B0 to B11 | B12 to B19 | B20 to B28 | B29 to B38 | B39 |

In Table 2, the AID12 field indicates the identifier information of the shared STA, and the AP Identifier field indicates the identifier information of the shared AP. The AID12 field and the AP Identifier field share the field indicated by B0 to B11 in the User Info field, occupying 12 bits. When the field indicated by B0 to B11 in the User Info field includes the AP Identifier field, it indicates that the shared device is a shared AP. When the field indicated by B0 to B11 in the User Info field includes the AID12 field, it indicates that the shared device is a shared STA.

The RU Allocation indicates resource unit allocation, occupying 8 bits in the User Info field, with a corresponding bits order being B12 to B19. The Allocation Duration indicates an allocated duration, occupying 9 bits in the User Info field, with a corresponding bits order being B20 to B28. The Reserved indicates a reserved bit, occupying 10 bits in the User Info field, with a corresponding bits order being B29 to B38. The PS160 field indicates a primary/secondary 160, occupying 1 bit in the User Info field, with a corresponding bit order being B39.

**Table 3:**

| Content | AP MLD ID | Link ID |
|---|---|---|
| Bits | 8 | 4 |
| Bits order | B0 to B7 | B8 to B11 |

Referring to Table 3, when the field indicated by B0 to B11 in the User Info field includes the AP Identifier field, the AP Identifier field may include two parts: an AP MLD ID subfield and a Link ID subfield. The AP MLD ID subfield occupies the subfield indicated by B0 to B7, occupying 8 bits. The Link ID subfield occupies the subfield indicated by B8 to B11, occupying 4 bits.

Optionally, in some embodiments, the first frame further includes second identifier information; in which the second identifier information indicates a type of TXS initiated by the sharing AP 101, and the type of the TXS includes allocating the transmission duration to the shared AP.

Optionally, the type of the TXS may further include: allocating the transmission duration to the shared STA.

In the above embodiment, the second identifier information in the first frame indicates the type of the TXS initiated by the sharing AP, and the type of the TXS includes allocating the transmission duration to the shared AP. In this way, a device that obtains the first frame may parse the first frame to obtain the type of the TXS initiated by the sharing AP.

Optionally, in some embodiments, the second identifier information is carried in a Triggered TXOP Sharing Mode subfield of the first frame; the Triggered TXOP Sharing Mode subfield is carried in a Common Info field of the first frame; in which the Triggered TXOP Sharing Mode subfield is set to a first parameter value, indicating that the sharing AP 101 allocates the transmission duration to the shared AP.

As an example, the first parameter value may be set to 3. That is, when the Triggered TXOP Sharing Mode subfield is set to 3, it indicates that the sharing AP 101 allocates the transmission duration to the shared AP.

Optionally, when the Triggered TXOP Sharing Mode subfield is set to a second parameter value, it may indicate that the sharing AP 101 allocates the transmission duration to the shared STA.

As an example, the second parameter value may be set to 1 or 2. That is, when the Triggered TXOP Sharing Mode subfield is set to 1 or 2, it indicates that the sharing AP 101 allocates the transmission duration to the shared STA.

As an example, refer to Table 4, which shows the value and the description of the TXOP Sharing Mode subfield in the MU-RTS TXS Trigger frame.

**Table 4:**

| TXOP Sharing Mode subfield value | Description |
|---|---|
| 0 | MU-RTS that does not initiate MU-RTS TXOP sharing procedure |
| 1 | MU-RTS that initiates MU-RTS TXOP sharing procedure wherein a scheduled STA can only transmit PPDU(s) addressed to its associated AP |
| 2 | MU-RTS that initiates MU-RTS TXOP sharing procedure wherein a scheduled STA can transmit PPDU(s) addressed to its associated AP or addressed to another STA |
| 3 | MU-RTS that initiates MU-RTS TXOP sharing procedure wherein a scheduled AP (shared AP) can transmit MAC protocol data unit(s) (MPDU(s)) with its associated STA or the Sharing AP |

Referring to Table 4, when the TXOP Sharing Mode subfield is set to 0, it indicates that the MU-RTS does not initiate the MU-RTS TXOP sharing procedure. When the TXOP Sharing Mode subfield is set to 1, it indicates that the MU-RTS initiates the MU-RTS TXOP sharing procedure wherein the scheduled STA can only transmit the PPDU(s) addressed to its associated AP. When the TXOP Sharing Mode subfield is set to 2, it indicates that the MU-RTS initiates the MU-RTS TXOP sharing procedure wherein the scheduled STA can transmit the PPDU(s) addressed to its associated AP or addressed to another STA. When the TXOP Sharing Mode subfield is set to 3, it indicates that the MU-RTS initiates the MU-RTS TXOP sharing procedure in which the scheduled AP (shared AP) can transmit the MPDU(s) with its associated STA or with the sharing AP.

In the above embodiment, the first frame includes the Common Info field, and the Common Info field includes the Triggered TXOP Sharing Mode subfield. When the Triggered TXOP Sharing Mode subfield is set to the first parameter value, it indicates that the sharing AP 101 allocates the transmission duration to the shared AP. When the Triggered TXOP Sharing Mode subfield is set to the second parameter value, it indicates that the sharing AP 101 allocates the transmission duration to the shared STA. In this way, a device that obtains the first frame may parse the parameter value of the Triggered TXOP Sharing Mode subfield in the first frame to obtain that the sharing AP 101 allocates the transmission duration to the shared AP or the shared STA.

At S204, the sharing AP 101 sends the first frame to indicate the shared device to perform data interaction with the sharing AP 101 or with an STA associated with the shared device within the transmission duration.

Optionally, in some embodiments, the sharing AP 101 may send the first frame to a neighbor AP (including the first AP 102) of the sharing AP 101 or to STAs associated with the sharing AP 101.

In the above embodiment, the sharing AP 101 determines the first frame after obtaining the TXOP, in which the first frame indicates that the sharing AP 101 shares the transmission duration with the shared device according to the TXOP; in which the first frame includes the first identifier information, the first identifier information includes the identifier information of the shared device, and the shared device includes the shared AP; and sends the first frame to the shared device to indicate the shared device to perform the data interaction with the sharing AP 101 or with the STA associated with the shared device within the transmission duration. In this way, in a C-TDMA process, the transmission duration is allocated by the sharing AP to a shared AP that supports inter-AP TXS among its neighbor APs.

At S205, the first AP 102 determines whether the first identifier information includes identifier information of the first AP 102. If the first identifier information includes the identifier information of the first AP 102, S206 is executed.

Optionally, in some embodiments, in a case that the User Info field includes the AP MLD ID subfield and the Link ID subfield, the first AP 102 determines that the AP MLD ID subfield matches an ID of a MLD AP with which the first AP 102 affiliated, and that the Link ID subfield matches a link ID of a working link of the first AP 102, and determines that the first identifier information includes the identifier information of the first AP 102.

Optionally, the first AP 102 may parse the received first frame to determine whether the User Info field includes the AP MLD ID subfield and the Link ID subfield, i.e., to determine whether the type of the shared device included in the first identifier information is an AP.

Optionally, in a case that the first AP 102 determines that the User Info field does not include the AP MLD ID subfield and the Link ID subfield, it may determine that the type of the shared device included in the first identifier information is not an AP, and within a time slot allocated by the sharing AP 101, it does not perform the data interaction with the sharing AP 101 or with the STA associated with the first AP 102.

Optionally, in a case that the first AP 102 determines that the User Info field includes the AP MLD ID subfield and the Link ID subfield (i.e., determines that the type of the shared device included in the first identifier information is an AP), it may determine whether the AP MLD ID in the AP MLD ID subfield of the User Info field matches the identifier of the MLD AP with which the first AP 102 affiliated, and whether the Link ID in the Link ID subfield of the User Info field matches the link ID of the working link of the first AP 102. When the first AP 102 determines that the AP MLD ID in the AP MLD ID subfield matches the ID of the MLD AP with which the first AP 102 affiliated, and the Link ID in the Link ID subfield matches the link ID of the working link of the first AP 102, the first AP 102 determines that the first identifier information includes the identifier information of the first AP 102.

Optionally, in a case that the first AP 102 determines that the User Info field includes the AP MLD ID subfield and the Link ID subfield, if it determines that the AP MLD ID in the AP MLD ID subfield does not match the ID of the MLD AP with which the first AP 102 affiliated, or the Link ID in the Link ID subfield does not match the link ID of the working link of the first AP 102, it determines that the first identifier information does not include the identifier information of the first AP 102, and within a time slot allocated by the sharing AP 101, it does not perform the data interaction with the sharing AP 101 or with the STA associated with the first AP 102.

In the above embodiment, in a case that the first AP 102 determines that the first identifier information includes the identifier information of the first AP 102, it determines that the sharing AP 101 allocates the transmission duration to the first AP 102, and performs the data interaction with the sharing AP 101 or with the STA associated with the first AP 102 within the transmission duration.

At S206, the first AP 102 determines that the first identifier information includes the identifier information of the first AP 102, and performs the data interaction with the sharing AP 101 or with an STA associated with the first AP 102 within the transmission duration.

In the above embodiment, the first AP 102 may parse the received first frame to obtain the first identifier information. When the first AP 102 determines that the first identifier information includes the identifier information of the first AP 102, it performs the data interaction with the sharing AP 101 or with an SP associated with the first AP 102 within the transmission duration.

Optionally, performing the data interaction with the sharing AP 101 or with the STA associated with the first AP 102 within the transmission duration includes: performing the data interaction with the sharing AP 101 or with the STA associated with the first AP 102 within the transmission duration, according to a transmission resource indicated by at least one of the Allocation Duration subfield, the RU Allocation subfield, or the PS160 subfield.

Optionally, the first AP 102 may also perform the data interaction with the STA associated with the first AP 102 within the transmission duration allocated by the sharing AP 101, according to the transmission resource indicated by at least one of the Allocation Duration subfield, the RU Allocation subfield, or the PS160 subfield.

In the above embodiment, the first AP 102 performs the data interaction with the sharing AP 101 or with the STA associated with the first AP 102 within the transmission duration, according to the transmission resource indicated by at least one of the Allocation Duration subfield, the RU Allocation subfield, or the PS160 subfield, which may save signaling overhead and avoid contention conflict and transmission interference in an overlapping basic service set (OBSS) scenario.

The method involved in embodiments of the present disclosure may include at least one of above steps and embodiments. For example, S201 may be implemented as an independent embodiment, S202 may be implemented as an independent embodiment, S203 may be implemented as an independent embodiment, S204 may be implemented as an independent embodiment, S205 may be implemented as an independent embodiment, S206 may be implemented as an independent embodiment, the combination of S201 and S202 may be implemented as an independent embodiment, the combination of S203 and S204 may be implemented as an independent embodiment, the combination of S205 and S206 may be implemented as an independent embodiment, the combination of S203, S204, S205 and S206 may be implemented as an independent embodiment, and the combination of S201, S202, S203, S204, S205 and S206 may be implemented as an independent embodiment, which is not limited herein.

In some embodiments, reference may be made to other optional implementations described before or after the specification corresponding to FIG. 2.

In some embodiments, names of information are not limited to those specified in embodiments. Terms such as "information", "message", "signal", "signaling", "report", "configuration", "indication", "instruction", "command", "channel", "parameter", "field", "domain", "symbol", "bit", "data", "program", "chip", etc., may be used interchangeably.

In some embodiments, terms such as "time point", "time", "time position", etc. may be used interchangeably; and terms such as "period", "time interval", "time window", "window", "time", etc. may be used interchangeably.

In some embodiments, terms such as "wireless access scheme", "waveform" may be used interchangeably.

In some embodiments, terms such as "certain", "predetermined", "preset", "set", "indicated", "a/an", "any", "first", etc. may be used interchangeably. "Certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited herein.

In some embodiments, determination or judgment may be performed using a value represented by 1 bit (0 or 1), or using boolean values represented by true or false, or by numerical comparison (e.g., comparison with a predetermined value), which is not limited herein.

In some embodiments, "does not expect to receive" may be interpreted as not receiving on a time-domain resource and/or a frequency-domain resource, or as not performing subsequent processing on received data after receiving the data; and "does not expect to send" may be interpreted as not sending, or as sending but not expecting a receiver to respond to content that is sent.

FIG. 4 is a first flowchart of a communication method according to embodiments of the present disclosure.

As shown in FIG. 4, the method may be performed by a sharing AP 101, including following steps at S401 to S404.

At S401, the sharing AP 101 determines a second frame, in which the second frame includes third identifier information, and the third identifier information indicates whether a neighbor AP of the sharing AP supports inter-AP TXS.

Optionally, in some embodiments, the third identifier information is carried in a first Triggered TXOP Sharing Mode 3 Support indicator bit of the second frame; the first Triggered TXOP Sharing Mode 3 Support indicator bit is carried in a Reduced Neighbor Report element field; in which the first Triggered TXOP Sharing Mode 3 Support indicator bit is set to a third parameter value, indicating that the neighbor AP supports the inter-AP TXS.

Optionally, in some embodiments, the second frame further includes fourth identifier information, and the fourth identifier information indicates whether the sharing AP supports the inter-AP TXS.

In the above embodiment, the fourth identifier information in the second frame is used to identify whether the sharing AP supports the inter-AP TXS. In this way, a device that receives the second frame may determine whether the sharing AP supports TXS.

In some embodiments, the fourth identifier information is carried in a second Triggered TXOP Sharing Mode 3 Support indicator bit of the second frame; the second Triggered TXOP Sharing Mode 3 Support indicator bit is carried in an UHR Capabilities element field of the second frame; in which the second Triggered TXOP Sharing Mode 3 Support indicator bit is set to a fourth parameter value, indicating that the sharing AP supports the inter-AP TXS.

For optional implementations of S401, reference may be made to the optional implementations of S201 in FIG. 2 and other related parts of the embodiment in FIG. 2, which will not be repeated here.

At S402, the sharing AP 101 broadcasts the second frame.

For optional implementations of S402, reference may be made to the optional implementations of S202 in FIG. 2 and other related parts of the embodiment in FIG. 2, which will not be repeated here.

At S403, the sharing AP 101 determines a first frame after obtaining a TXOP, in which the first frame indicates that the sharing AP 101 shares a transmission duration with a shared device according to the TXOP; in which the first frame includes first identifier information, the first identifier information includes identifier information of the shared device, and the shared device includes a shared AP.

Optionally, in some embodiments, the first identifier information is carried in a User Info field of the first frame; in which the User Info field includes an AP MLD ID subfield and a Link ID subfield, and the first identifier information indicates identifier information of the shared AP; in which the AP MLD ID subfield indicates an AP MLD ID of a MLD AP with which the shared AP affiliated, and the Link ID subfield indicates a Link ID of a working link of the shared AP.

Optionally, in some embodiments, the User Info field further includes at least one of: an Allocation Duration subfield, an RU Allocation subfield, or a PS160 subfield.

Optionally, in some embodiments, the first frame further includes second identifier information; in which the second identifier information indicates a type of TXS initiated by the sharing AP 101, and the type of the TXS includes allocating the transmission duration to the shared AP.

Optionally, in some embodiments, the second identifier information is carried in a Triggered TXOP Sharing Mode subfield of the first frame; the Triggered TXOP Sharing Mode subfield is carried in a Common Info field of the first frame; in which the Triggered TXOP Sharing Mode subfield is set to a first parameter value, indicating that the sharing AP 101 allocates the transmission duration to the shared AP.

For optional implementations of S403, reference may be made to the optional implementations of S203 in FIG. 2 and other related parts of the embodiment in FIG. 2, which will not be repeated here.

At S404, the sharing AP 101 sends the first frame to indicate the shared device to perform data interaction with the sharing AP 101 or with an STA associated with the shared device within the transmission duration.

For optional implementations of S404, reference may be made to the optional implementations of S204 in FIG. 2 and other related parts of the embodiment in FIG. 2, which will not be repeated here.

The communication method involved in embodiments of the present disclosure may include at least one of above steps and embodiments. For example, S401 may be implemented as an independent embodiment, S402 may be implemented as an independent embodiment, S403 may be implemented as an independent embodiment, S404 may be implemented as an independent embodiment, the combination of S401 and S402 may be implemented as an independent embodiment, the combination of S403 and S404 may be implemented as an independent embodiment, and the combination of S401, S402, S403 and S404 may be implemented as an independent embodiment, which is not limited herein.

In some embodiments, reference may be made to other optional implementations described before or after the specification corresponding to FIG. 4.

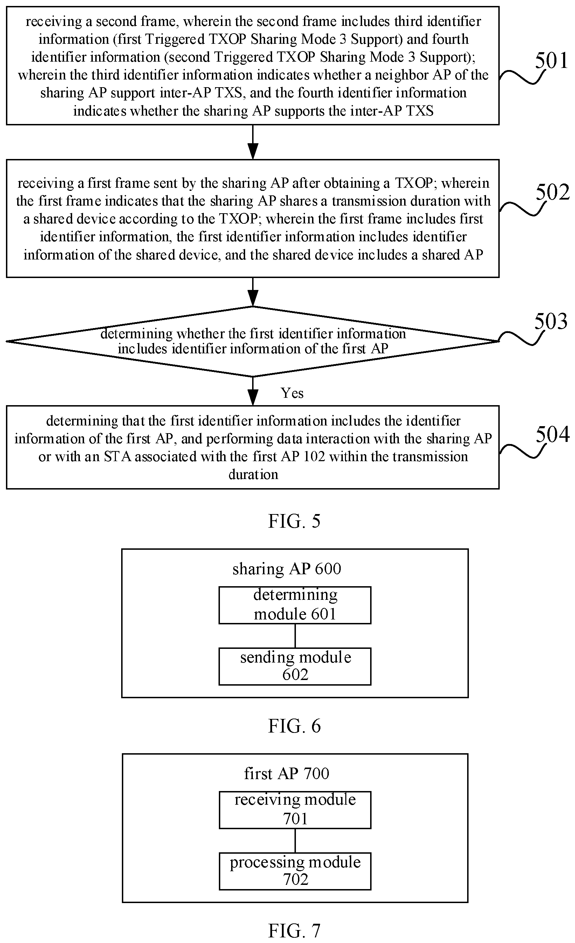

FIG. 5 is a second flowchart of a communication method according to embodiments of the present disclosure.

As shown in FIG. 5, the method may be performed by a first AP 102, including followings steps at S501 to S504.

At S501, the first AP 102 receives a second frame sent by an AP 101, in which the second frame includes third identifier information, and the third identifier information indicates whether a neighbor AP of the sharing AP supports inter-AP TXS.

Optionally, in some embodiments, the third identifier information is carried in a first Triggered TXOP Sharing Mode 3 Support indicator bit of the second frame; the first Triggered TXOP Sharing Mode 3 Support indicator bit is carried in a Reduced Neighbor Report element field of the second frame; in which the first Triggered TXOP Sharing Mode 3 Support indicator bit is set to a third parameter value, indicating that the neighbor AP supports the inter-AP TXS.

Optionally, in some embodiments, the second frame further includes fourth identifier information, and the fourth identifier information indicates whether the sharing AP supports the inter-AP TXS.

In the above embodiment, the fourth identifier information in the second frame is used to identify whether the sharing AP supports the inter-AP TXS. In this way, a device that receives the second frame may determine whether the sharing AP supports TXS.

In some embodiments, the fourth identifier information is carried in a second Triggered TXOP Sharing Mode 3 Support indicator bit of the second frame; the second Triggered TXOP Sharing Mode 3 Support indicator bit is carried in an UHR Capabilities element field of the second frame; in which the second Triggered TXOP Sharing Mode 3 Support indicator bit is set to a fourth parameter value, indicating that the sharing AP supports the inter-AP TXS.

For optional implementations of S501, reference may be made to the optional implementations of S201 and S202 in FIG. 2 and other related parts of the embodiment in FIG. 2, which will not be repeated here.

At S502, the first AP 102 receives a first frame sent by the AP 101 after obtaining a TXOP; in which the first frame indicates that the sharing AP 101 shares a transmission duration with a shared device according to the TXOP; in which the first frame includes first identifier information, the first identifier information includes identifier information of the shared device, and the shared device includes a shared AP.

Optionally, in some embodiments, the first identifier information is carried in a User Info field of the first frame; in which the User Info field includes an AP MLD ID subfield and a Link ID subfield, and the first identifier information indicates identifier information of the shared AP; in which the AP MLD ID subfield indicates an AP MLD ID of a MLD AP with which the shared AP affiliated, and the Link ID subfield indicates a Link ID of a working link of the shared AP.

Optionally, in some embodiments, the User Info field further includes at least one of: an Allocation Duration subfield, an RU Allocation subfield, or a PS160 subfield.

Optionally, in some embodiments, the first frame further includes second identifier information; in which the second identifier information indicates a type of TXS initiated by the sharing AP 101, and the type of the TXS includes allocating the transmission duration to the shared AP, or allocating the transmission duration to the shared STA.

Optionally, in some embodiments, the second identifier information is carried in a Triggered TXOP Sharing Mode subfield of the first frame; the Triggered TXOP Sharing Mode subfield is carried in a Common Info field of the first frame; in which the Triggered TXOP Sharing Mode subfield is set to a first parameter value, indicating that the sharing AP 101 allocates the transmission duration to the shared AP.

For optional implementations of S502, reference may be made to the optional implementations of S203 and S204 in FIG. 2 and other related parts of the embodiment in FIG. 2, which will not be repeated here.

At S503, the first AP 102 determines whether the first identifier information includes identifier information of the first AP 102. If the first AP 102 determines that the first identifier information includes identifier information of the first AP 102, S504 is executed.

Optionally, in some embodiments, in a case that the User Info field includes an AP MLD ID subfield and a Link ID subfield, the first AP 102 determines that the AP MLD ID subfield matches an ID of a MLD AP with which the first AP 102 affiliated, and that the Link ID subfield matches a link ID of a working link of the first AP 102, and determines that the first identifier information includes the identifier information of the first AP 102.

For optional implementations of S503, reference may be made to the optional implementations of S205 in FIG. 2 and other related parts of the embodiment in FIG. 2, which will not be repeated here.

At S504, the first AP 102 determines that the first identifier information includes the identifier information of the first AP 102, and performs data interaction with the sharing AP 101 or with an STA associated with the first AP 102 within the transmission duration.

Optionally, performing the data interaction with the sharing AP 101 or with the STA associated with the first AP 102 within the transmission duration includes: performing the data interaction with the sharing AP 101 or with the STA associated with the first AP 102 within the transmission duration, according to a transmission resource indicated by at least one of the Allocation Duration subfield, the RU Allocation subfield, or the PS160 subfield.

For optional implementations of S503, reference may be made to the optional implementations of S206 in FIG. 2 and other related parts of the embodiment in FIG. 2, which will not be repeated here.

The communication method involved in embodiments of the present disclosure may include at least one of above steps and embodiments. For example, S501 may be implemented as an independent embodiment, S502 may be implemented as an independent embodiment, S503 may be implemented as an independent embodiment, S504 may be implemented as an independent embodiment, the combination of S502 and S503 may be implemented as an independent embodiment, the combination of S503 and S504 may be implemented as an independent embodiment, the combination of S501, S502 and S503 may be implemented as an independent embodiment, and the combination of S501, S502, S503 and S504 may be implemented as an independent embodiment, which is not limited herein.

In some embodiments, reference may be made to other optional implementations described before or after the specification corresponding to FIG. 5.

Embodiments of the present disclosure further provide an apparatus for implementing any one of the above methods. For example, an apparatus is provided, including units or modules for implementing steps executed by the terminal in any one of the above methods. For another example, another apparatus is further provided, including units or modules for implementing steps executed by the network device (e.g., an access network device, a core network function node, a core network device, etc.) in any one of the above methods.

It should be understood that the division of units or modules in the above apparatuses is merely a division of logical functions. In actual implementations, the units or modules may be fully or partially integrated into a single physical entity or may be physically separated. In addition, the units or modules in the apparatus may be implemented in a form of a processor invoking software. For example, the apparatus includes a processor, which is connected to a memory for storing instructions. The processor invokes the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in a form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in a form of the processor invoking software, or fully implemented in a form of the hardware circuit, or partially implemented in a form of the processor invoking software and the remaining part implemented in a form of the hardware circuit.

In embodiments of the present disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of some or all of the units or the modules. In addition, the hardware circuit may be designed specifically for artificial intelligence and may be understood as an ASIC, such as a neural network processing unit (NPU), a tensor processing unit (TPU), or a deep learning processing unit (DPU).

FIG. 6 is a block diagram of a sharing AP according to embodiments of the present disclosure. As shown in FIG. 6, a sharing AP 600 may include at least one of: a determining module 601 or a sending module 602.

In some embodiments, the determining module 601 is configured to determine a first frame after obtaining a TXOP, in which the first frame indicates that the sharing AP shares a transmission duration with a shared device according to the TXOP; in which the first frame includes first identifier information, the first identifier information includes identifier information of the shared device, and the shared device includes a shared AP.

In some embodiments, the sending module 602 is configured to send the first frame to indicate the shared device to perform data interaction with the sharing AP or with an STA associated with the shared device within the transmission duration.

Optionally, the determining module 601 is configured to implement at least one of the communication steps (e.g., S201, S203, S401, or S403, which is not limited herein) performed by the sharing AP 101 in any one of the above methods, which will not be repeated here.

Optionally, the sending module 602 is configured to implement at least one of the sending/receiving steps (e.g., S202, S202, S403, or S404, which is not limited herein) performed by the sharing AP 101 in any one of the above methods, which will not be repeated here.

FIG. 7 is a block diagram of a shared AP according to embodiments of the present disclosure. As shown in FIG. 7, the first AP 700 may include at least one of: a receiving module 701 or a processing module 702.

In some embodiments, the receiving module 701 is configured to receive a first frame, in which the first frame indicates that a sharing AP shares a transmission duration with a shared device according to an obtained TXOP; in which the first frame includes first identifier information, the first identifier information includes identifier information of the shared device, and the shared device includes a shared AP.

In some embodiments, the processing module 702 is configured to determine that the first identifier information includes identifier information of the first AP, and perform data interaction with the sharing AP or with an STA associated with the first AP within the transmission duration.

Optionally, the receiving module 701 is configured to implement at least one of sending/receiving steps (e.g., S501, or S502, which is not limited herein) performed by the first AP 102 in any one of the above methods, which will not be repeated here.

The processing module 702 is configured to implement at least one of communication steps (e.g., S205, S206, S503, or S504, which is not limited herein) performed by the first AP 102 in any one of the above methods, which will not be repeated here.

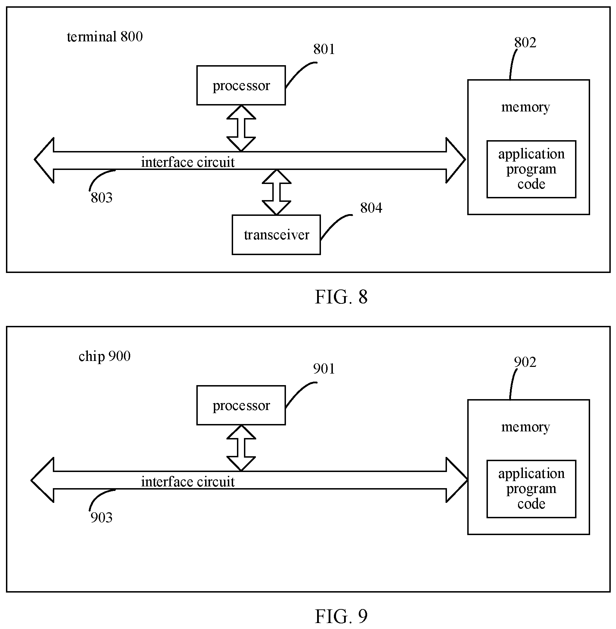

FIG. 8 is a block diagram of a terminal 800 (e.g., user equipment, etc.) according to embodiments of the present disclosure. The terminal 800 may be a chip, a chip system, or a processor, etc. that supports the network device in implementing any one of the above methods, or may be a chip, a chip system, or a processor, etc. that supports the terminal in implementing any one of the above methods. The terminal 800 may be used to implement the methods described in the above method embodiments. For details, reference may be made to the description in the above method embodiments.

As shown in FIG. 8, the terminal 800 includes one or more processors 801. The processor 801 may be a general-purpose processor or a dedicated processor, such as, a baseband processor and a central processing unit. The baseband processor may be used for processing communication protocols and communication data. The central processing unit may be used for controlling the communication device (e.g., a base station, a baseband chip, a terminal, a terminal chip, a DU, or a CU), executing programs, and processing data of the programs. The terminal 800 is configured to implement any one of the above methods.

In some embodiments, the terminal 800 further includes one or more memories 802 for storing instructions. Optionally, all or part of the memory 802 may also be located outside the terminal 800.

In some embodiments, the terminal 800 further includes one or more transceivers 804. When the terminal 800 includes one or more transceivers 804, the transceiver 804 implements at least one of communication steps such as sending and/or receiving (e.g., S202, S204, S402, S404, S501, or S502, which is not limited herein) in the above methods, and the processor 801 implements at least one of other steps (e.g., S201, S203, S205, S206, S401, S403, S503, or S504, which is not limited herein).

In some embodiments, the transceiver may include a receiver and/or a transmitter, which may be separate or integrated. Optionally, terms such as transceiver, transceiver unit, transceiver machine, transceiver circuit, etc. may be used interchangeably; terms such as transmitter, sending unit, transmitter machine, sending circuit, etc. may be used interchangeably; and terms such as receiver, receiving unit, receiver machine, receiving circuit, etc. may be used interchangeably.

In some embodiments, the terminal 800 may include one or more interface circuits 803. Optionally, the interface circuit 803 is connected to the memory 802, and the interface circuit 803 may be used to receive signals from the memory 802 or other apparatuses, and may be used to send the signals to the memory 802 or other apparatuses. For example, the interface circuit 803 may read instructions stored in the memory 802 and send the instructions to the processor 801.

The terminal 800 described in the above embodiments may be a communication device such as a user equipment, but the scope of the terminal 800 described in the present disclosure is not limited thereto, and the structure of the terminal 800 is not limited by FIG. 8. The communication device may be an independent device or may be part of a larger device. For example, the communication device may be: (1) an independent integrated circuit (IC), or a chip, or a chip system or subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 9 is a block diagram of a chip 900 according to embodiments of the present disclosure. For the case where the terminal 1300 is a chip or a chip system, reference may be made to the block diagram of the chip 900 shown in FIG. 9, which is not limited herein.

The chip 900 includes one or more processors 901, and the chip 900 is configured to implement any one of the above methods.

In some embodiments, the chip 900 further includes one or more interface circuits 903. Optionally, the interface circuit 903 is connected to a memory 902, and the interface circuit 903 may be used to receive signals from the memory 902 or other apparatuses, and may be used to send the signals to the memory 902 or other apparatuses. For example, the interface circuit 903 may read instructions stored in the memory 902 and send the instructions to the processor 901.

In some embodiments, the interface circuit 903 implements at least one of communication steps such as sending and/or receiving (e.g., S201, S203, S205, S401, S403, or S503, which is not limited herein) in the above methods, and the processor 901 executes at least one of the other steps (e.g., S201, S203, S205, S206, S401, S403, S503, or S504, which is not limited herein).

Optionally, terms such as interface circuit, interface, transceiver pin, transceiver, etc. may be used interchangeably.

In some embodiments, the chip 900 further includes one or more memories 902 for storing instructions. Optionally, all or part of the memory 902 may be located outside the chip 900.

The present disclosure further provides a storage medium storing instructions. When the instructions are executed on the terminal 800, the terminal 800 implements any one of the above methods. Optionally, the storage medium is an electronic storage medium. Optionally, the storage medium is a computer-readable storage medium, which is not limited herein, and may also be a storage medium readable by other apparatuses. Optionally, the storage medium may be a non-transitory storage medium, which is not limited herein, and may also be a transitory storage medium.

The present disclosure further provides a program product. When the program product is executed by the terminal 800, the terminal 800 implements any one of the above methods. Optionally, the program product is a computer program product.

The present disclosure further provides a computer program that, when executed on a computer, causes the computer to implement any one of the above methods.

## Claims

1. A communication method, performed by a sharing access point (AP), comprising:
determining a first frame after obtaining a transmission opportunity (TXOP), wherein the first frame indicates that the sharing AP shares a transmission duration with a shared device according to the TXOP;
wherein the first frame comprises first identifier information, the first identifier information comprises identifier information of the shared device, and the shared device comprises a shared AP; and
sending the first frame to indicate the shared device to perform data interaction with the sharing AP or with a station (STA) associated with the shared device within the transmission duration.

2. The method of claim 1, wherein
the first identifier information is carried in a User Info field of the first frame;
wherein the User Info field comprises an AP MLD ID subfield and a Link ID subfield, and the first identifier information indicates identifier information of the shared AP; wherein the AP MLD ID subfield indicates an AP MLD ID of a MLD AP with which the shared AP affiliated, and the Link ID subfield indicates a Link ID of a working link of the shared AP.

3. The method of claim 1 or 2, wherein
the first frame further comprises second identifier information;
wherein the second identifier information indicates a type of TXOP sharing (TXS) initiated by the sharing AP, and the type of the TXS comprises allocating the transmission duration to the shared AP.

4. The method of claim 3, wherein
the second identifier information is carried in a Triggered TXOP Sharing Mode subfield of the first frame;
the Triggered TXOP Sharing Mode subfield is carried in a Common Info field of the first frame;
wherein the Triggered TXOP Sharing Mode subfield is set to a first parameter value, indicating that the sharing AP allocates the transmission duration to the shared AP.

5. The method of claim 1, further comprising:
determining a second frame, wherein the second frame comprises third identifier information, and the third identifier information indicates whether a neighbor AP of the sharing AP supports inter-AP TXS; and
sending the second frame.

6. The method of claim 5, wherein the third identifier information is carried in a first Triggered TXOP Sharing Mode 3 Support indicator bit of the second frame;
the first Triggered TXOP Sharing Mode 3 Support indicator bit is carried in a Reduced Neighbor Report element field of the second frame;
wherein the first Triggered TXOP Sharing Mode 3 Support indicator bit is set to a third parameter value, indicating that the neighbor AP supports the inter-AP TXS.

7. The method of claim 6, wherein
the second frame further comprises fourth identifier information, and the fourth identifier information indicates whether the sharing AP supports the inter-AP TXS.

8. The method of claim 7, wherein the fourth identifier information is carried in a second Triggered TXOP Sharing Mode 3 Support indicator bit of the second frame;
the second Triggered TXOP Sharing Mode 3 Support indicator bit is carried in an Ultra High Reliability (UHR) Capabilities element field of the second frame;
wherein the second Triggered TXOP Sharing Mode 3 Support indicator bit is set to a fourth parameter value, indicating that the sharing AP supports the inter-AP TXS.

9. The method of claim 2, wherein
the User Info field further comprises at least one of: an Allocation Duration subfield, a Resource Unit (RU) Allocation subfield, or a primary/secondary 160 (PS160) subfield.

10. The method of claim 9, wherein performing, by the shared device, the data interaction with the sharing AP or with the STA associated with the shared device within the transmission duration, comprises:
performing, by the shared device, the data interaction with the sharing AP or with the STA associated with the shared device within the transmission duration, according to a transmission resource indicated by at least one of the Allocation Duration subfield, the RU Allocation subfield, or the PS160 subfield.

11. A communication method, performed by a first access point (AP), comprising:
receiving a first frame, wherein the first frame indicates that a sharing AP shares a transmission duration with a shared device according to an obtained transmission opportunity (TXOP);
wherein the first frame comprises first identifier information, the first identifier information comprises identifier information of the shared device, and the shared device comprises a shared AP; and
determining that the first identifier information comprises identifier information of the first AP, and performing data interaction with the sharing AP or with a station (STA) associated with the first AP within the transmission duration.

12. The method of claim 11, wherein
the first identifier information is carried in a User Info field of the first frame;
wherein the User Info field comprises an AP MLD ID subfield and a Link ID subfield, and the first identifier information indicates identifier information of the shared AP; wherein the AP MLD ID subfield indicates an AP MLD ID of a MLD AP with which the shared AP affiliated, and the Link ID subfield indicates a Link ID of a working link of the shared AP; and
the User Info field comprises an AID12 subfield, and the first identifier information indicates identifier information of the shared STA.

13. The method of claim 12, wherein determining that the first identifier information comprises the identifier information of the first AP comprises:
in a case that the User Info field comprises the AP MLD ID subfield and the Link ID subfield,
determining that the AP MLD ID subfield matches an identifier of a MLD AP with which the first AP affiliated, and that the Link ID subfield matches a link ID of a working link of the first AP, and determining that the first identifier information comprises the identifier information of the first AP.

14. The method of claim 12, wherein
the User Info field further comprises at least one of: an Allocation Duration subfield, a Resource Unit (RU) Allocation subfield, or a primary/secondary 160 (PS160) subfield.

15. The method of claim 14, wherein performing the data interaction with the sharing AP or with the STA associated with the first AP within the transmission duration comprises:
performing the data interaction with the sharing AP or with the STA associated with the first AP within the transmission duration, according to a transmission resource indicated by at least one of the Allocation Duration subfield, the RU Allocation subfield, or the PS160 subfield.

16. An access point (AP), being a sharing AP, comprising:
a determining module, configured to determine a first frame after obtaining a transmission opportunity (TXOP), wherein the first frame indicates that the sharing AP shares a transmission duration with a shared device according to the TXOP;
wherein the first frame comprises first identifier information, the first identifier information comprises identifier information of the shared device, and the shared device comprises a shared AP; and
a sending module, configured to send the first frame to indicate the shared device to perform data interaction with the sharing AP or with a station (STA) associated with the shared device within the transmission duration.

17. An access point (AP), being a first AP, comprising:
a receiving module, configured to receive a first frame, wherein the first frame indicates that a sharing AP shares a transmission duration with a shared device according to an obtained transmission opportunity (TXOP);
wherein the first frame comprises first identifier information, the first identifier information comprises identifier information of the shared device, and the shared device comprises a shared AP; and
a processing module, configured to determine that the first identifier information comprises identifier information of the first AP, and perform data interaction with the sharing AP or with a station (STA) associated with the first AP within the transmission duration.

18. An access point (AP), comprising:
one or more processors,
wherein the AP is configured to implement the communication method of any one of claims 1 to 10 or claims 11 to 15.

19. A communication system, comprising a sharing access point (AP) and a shared AP, wherein the sharing AP is configured to implement the communication method of any one of claims 1 to 10, and the shared AP is configured to implement the method of any one of claims 11 to 15.

20. A storage medium storing instructions that, when executed on a communication device, cause the communication device to implement the communication method of any one of claims 1 to 10, or to implement the communication method of any one of claims 11 to 15.
